# EUROPEAN PATENT APPLICATION

(11) **EP 4 726 547 A1**
(43) Date of publication of application: **15.04.2026**
(21) Application number: 25205266.7
(22) Date of filing: 29.09.2025
(51) Int. Cl.: G06F 9/50, G06N 3/063

(54) **SYSTEMS AND METHODS FOR PERFORMING OPERATIONS WITH HETEROGENEOUS COMPUTE AND MEMORY RESOURCES**

(30) Priority: 08.10.2024 US 202463704964 P; 31.07.2025 US 202519287779
(71) Applicant: Samsung Electronics Co., Ltd., Suwon-si, Gyeonggi-do 16677 (KR)
(72) Inventor: NGUYEN, Marie Mai, San Jose, CA, 95134 (US); PITCHUMANI, Rekha, San Jose, CA, 95134 (US); SAJID, Usman, San Jose, CA, 95134 (US); KANG, Yangwook, San Jose, CA, 95134 (US); KI, Yang Seok, San Jose, CA, 95134 (US)
(74) Representative: Kuhnen & Wacker Patent- und Rechtsanwaltsbüro PartG mbB

(57) **Abstract**

Systems and methods for performing operations with heterogeneous compute and memory resources are disclosed. Data identifying a first portion of an operation and a second portion of the operation may be received. A first set of resources may be caused to perform the first portion of the operation. A second set of resources may be identified based on the operation. The second set of resources may include a first base die including a processing circuit, a memory die attached to the first base die, and a second base die connected to the first base die. The second base die may include a second processing circuit. The second set of resources may be caused to perform the second portion of the operation.

## Description

### FIELD

The disclosure relates generally to performing operations with compute and memory resources, and more particularly to systems and methods for performing operations with heterogeneous compute and memory resources.

### BACKGROUND

Applications in which inputs/outputs are intended to be received/generated in substantially real time are consuming compute resources and memory resources at increasing rates. Performance of these applications may be limited based on the compute resources, the memory resources, or both.

The above information disclosed in this Background section is for enhancement of understanding the background of the disclosure and therefore this Background section may contain subject matter that does not constitute prior art.

### SUMMARY

The invention is set out in the appended claims.

In exemplary embodiments, data identifying a first portion of an operation and a second portion of the operation may be received. A first set of resources may be caused to perform the first portion of the operation. A second set of resources may be identified based on the operation. The second set of resources may include a first base die including a processing circuit, a memory die attached to the first base die, and a second base die connected to the first base die. The second base die may include a second processing circuit. The second set of resources may be caused to perform the second portion of the operation.

In exemplary embodiments, data identifying an operation to be performed may be received. A first set of resources may be identified based on a first portion of the operation. The first set of resources may include a first base die including a first processing circuit, a first memory die attached to the first base die, and a compute device connected to the first base die. The first set of resources may be caused to perform the first portion of the operation. A second set of resources may be caused to perform a second portion of the operation.

In exemplary embodiments, data identifying a first portion of an operation and a second portion of the operation may be received. A set of resources may be identified to perform the operation. The set of resources may include a compute device, a base die connected to the compute device, and a memory die attached to the base die. The base die may include one or more processing circuits. The set of resources in a first configuration may be caused to perform the first portion of the operation. The set of resources in a second configuration may be caused to perform the second portion of the operation.

### BRIEF DESCRIPTION OF THE DRAWINGS

The drawings described below are examples of how embodiments of the disclosure may be implemented, and are not intended to limit embodiments of the disclosure. Individual embodiments of the disclosure may include elements not shown in particular figures and/or may omit elements shown in particular figures. The drawings are intended to provide illustration and may not be to scale.
FIG. 1 illustrates a system including servers with resources, according to embodiments of the disclosure.
FIG. 2 illustrates a memory die of a memory device, according to embodiments of the disclosure.
FIG. 3 illustrates a base die of a memory device, according to embodiments of the disclosure.
FIG. 4 illustrates a processing circuit, according to embodiments of the disclosure.
FIG. 5 illustrates an example of a first set of resources for performing memory intensive operations, according to embodiments of the disclosure.
FIG. 6 illustrates an example of a second set of resources for performing memory intensive operations and/or compute intensive operations, according to embodiments of the disclosure.
FIG. 7 illustrates an example of a third set of resources for performing compute intensive operations, according to embodiments of the disclosure.
FIG. 8 illustrates a representation of performing an inference operation using a generative large language model, according to embodiments of the disclosure.
FIG. 9A illustrates a representation of performing first and second portions of an inference operation using heterogeneous resources, according to embodiments of the disclosure.
FIG. 9B illustrates a representation of performing first and second portions of an inference operation using heterogeneous resources, according to embodiments of the disclosure.
FIG. 10A illustrates a representation of performing first and second portions of an inference operation using heterogeneous resources, according to embodiments of the disclosure.
FIG. 10B illustrates a representation of performing first and second portions of an inference operation using heterogeneous resources, according to embodiments of the disclosure.
FIG. 11 shows a flowchart of an example procedure for performing portions of an inference operation, according to embodiments of the disclosure.
FIG. 12 shows a flowchart of an example procedure for performing portions of an inference operation, according to embodiments of the disclosure.
FIG. 13 shows a flowchart of an example procedure for performing portions of an inference operation, according to embodiments of the disclosure.

### DETAILED DESCRIPTION

Reference will now be made in detail to embodiments of the disclosure, examples of which are illustrated in the accompanying drawings. In the following detailed description, numerous specific details are set forth to enable a thorough understanding of the disclosure. It should be understood, however, that persons having ordinary skill in the art may practice the disclosure without these specific details. In other instances, well-known methods, procedures, components, circuits, and networks have not been described in detail so as not to unnecessarily obscure aspects of the embodiments.

It will be understood that, although the terms first, second, etc. may be used herein to describe various elements, these elements should not be limited by these terms. These terms are only used to distinguish one element from another. For example, a first module could be termed a second module, and, similarly, a second module could be termed a first module, without departing from the scope of the disclosure.

The terminology used in the description of the disclosure herein is for the purpose of describing particular embodiments only and is not intended to be limiting of the disclosure. As used in the description of the disclosure and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The components and features of the drawings are not necessarily drawn to scale.

Compute resources and memory resources are utilized differently for different applications. Some applications include first operations that consume substantial compute resources and second operations that consume substantial memory resources. Performance of the first and second operations within these applications may be limited based on compute resources, memory resources, or both. In order to overcome such limitations, heterogeneous compute and memory resources having different advantages and limitations may be leveraged to support both the first and second operations.

In some example embodiments, the disclosed systems are configured to utilize homogeneous compute and memory resources such as a first set of resources, a second set of resources, or a third set of resources to reduce power consumption or latency of an operation. The first set of resources may generally be configured to perform memory intensive operations (e.g., at transfer rates above a threshold amount of data per second). The third set of resources may generally be configured to perform compute intensive operations (e.g., with computational throughput above a threshold number of instructions per second). The second set of resources may be generally configured to perform memory intensive and/or compute intensive operations.

The disclosed systems may receive data identifying a first portion of an operation and a second portion of the operation. In some embodiments, the operation may include an inference operation to be performed using a generative large language model. In these embodiments, the first portion of the operation can be referred to as a "prefill" or "summarization" phase where an input is completely processed and represented as a prompt for the model and the second portion of the operation can be referred to as a "decode" or "generation" phase where sequential parts of an output are generated until the output is complete.

The first portion of the operation may be compute intensive (e.g., requires computational resources exceeding a predetermined threshold amount of floating point operations per second) and the second portion of the operation may be memory intensive (e.g., requires data transfer at rates exceeding a predetermined threshold amount of data per second). In order to perform the operation, the heterogeneous compute and memory resources are evaluated to identify sets of resources that are capable of performing the first portion of the operation and/or the second portion of the operation based on an objective. In some embodiments, the objective may include reducing power consumption or latency associated with the operation.

In some embodiments, the disclosed systems can identify the first set of resources based on the objective. The first set of resources can include a first base die, a first memory die, and a second base die. The first base die may function as an interface between the first memory die and another component such as an interposer. The first base die may include a first processing circuit. The memory die may be attached to the first base die and the second base die may be connected to the first base die. The second base die may be connected to the first base die by one or more die-to-die interfaces, electronically via an interposer, a redistribution layer, one or more interconnects, and/or other types of connections. In some embodiments, the second base die may include a second processing circuit.

In some embodiments, the disclosed systems may also identify the second set of resources based on the objective. The second set of resources may include a third base die, a second memory die, and a compute device. The third base die can include a third processing circuit. In some embodiments, the second memory die is attached to the third base die and the compute device is connected to the third base die.

In some embodiments, the disclosed systems cause the second set of resources to perform the first portion of the operation that is compute intensive. In some embodiments, the disclosed systems cause the first set of resources to perform the second portion of the operation that is memory intensive. It is to be appreciated that, in some embodiments, the second set of resources includes computing/processing capacity for performing the first portion of the operation and the first set of resources includes memory capacity for performing the second portion of the operation. By identifying the first and second sets of resources as described above and below, the first and second portions of the operation may be performed even though the first portion is compute intensive and the second portion memory intensive. This is because the first and second sets of resources have different advantages (e.g., substantial memory resources and substantial compute resources, respectively) which are applied to performing the first and second portions of the operation, respectively.

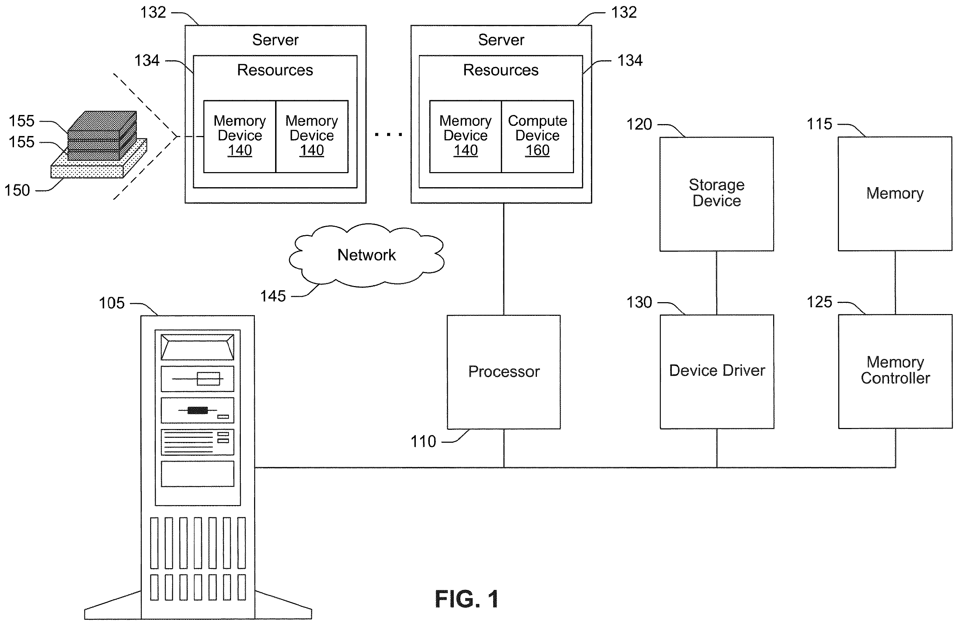

FIG. 1 illustrates a system including servers 132 with resources 134, according to embodiments of the disclosure. As shown in FIG. 1, a machine 105 (e.g., a host) includes a processor 110, a memory 115, and a storage device 120. The processor 110 can include a variety of types of processors such as central processing units (CPUs), accelerators, graphics processing units (GPUs), processors implemented using field-programmable gate arrays (FPGAs) (e.g., soft processors), and other types of processors. The memory 115 can include volatile memory and/or non-volatile memory and the memory 115 is representative of a variety of types of memory, including, but not limited to, random access memory (RAM), static RAM (SRAM), dynamic RAM (DRAM), synchronous DRAM (SDRAM), combinations thereof, and the like.

A memory controller 125 may manage read/write operations performed using the memory 115. In the illustrated example, the processor 110 is communicatively coupled to the memory controller 125 via a wired or wireless connection. The processor 110 is also shown to be communicatively coupled to the storage device 120 via a device driver 130. The device driver 130 can control the storage device 120 and the device driver 130 may be implemented using software, hardware, or a combination of software and hardware.

The system shown in FIG. 1 is illustrated to include servers 132 having resources 134 (e.g., compute and/or memory resources) that may be communicatively coupled to the machine 105 via a wired or wireless connection. By way of example, the processor 110 may be connected to the servers 132 via a network 145 (e.g., a wi-fi network, a wide area network, a local area network, a cellular network, or other types of networks). In some embodiments, the resources 134 are heterogeneous such that different servers 132 may have different resources 134. For instance, differences between the different resources 134 can include hardware differences, software differences, firmware difference, and/or other differences.

In the illustrated example, the resources 134 of a first server 132 include a memory device 140 and a compute device 160 while the resources 134 of a second server 132 include two memory devices 140. It is to be appreciated that, in some embodiments, the resources 134 may be heterogeneous based on different device configurations and/or connections. For example, if the resources 134 of the servers 132 illustrated in FIG. 1 each included the two memory devices 140, then the resources 134 can be heterogeneous if the memory devices 140 are configured/connected differently. In some embodiments, the resources 134 can be different because of different types of network configurations (e.g., for communications via the network 145), different types of operating systems, different types of workloads, different types of permissions and/or security protocols, different types of environments (e.g., cloud-based or virtual), or other types of differences.

Compute and/or memory resources included in a memory device 140 may be physically disposed in a three-dimensional stack (e.g., to reduce distances between locations of the resources). In the example depicted in FIG. 1, a memory device 140 is illustrated to include a base die 150 and one or more memory die 155 attached to the base die 150 in a three-dimensional stack. In some embodiments, compute and/or memory resources of the memory device 140 are connected to the base die 150 and/or the memory die 155. For instance, including compute and/or memory resources of the memory device 140 in a three-dimensional stack of the memory die 155 attached to the base die 150 may reduce power consumed and physical space occupied by the compute and/or memory resources. Although examples are described with respect to the memory die 155 attached to the base die 150, it is to be appreciated that, in some embodiments, compute and/or memory resources of the memory device 140 are included in other orientations (e.g., non-stacked orientations) and configurations (e.g., integrated configurations).

In some embodiments, the resources 134 included in the servers 132 may be available (e.g., to the machine 105) for performing one or more operations, for example, as part of training a machine learning model or implementing a trained machine learning model. It should be appreciated that performing the operations may consume different types and amounts of the resources 134. For example, the operations can be memory intensive, compute intensive, or both memory intensive and compute intensive. Accordingly, the disclosed systems can perform (e.g., schedule) some operations using the resources 134 that include the memory device 140 and the compute device 160 while the disclosed systems can perform (e.g., schedule) other operations using the resources 134 that include the two memory devices 140.

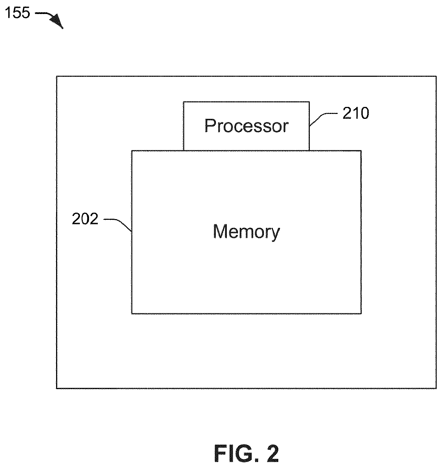

FIG. 2 illustrates a memory die 155 of a memory device 140, according to embodiments of the disclosure. As shown, a memory die 155 includes a memory 202. The memory 202 can include volatile memory and/or non-volatile memory and the memory 202 is representative of a variety of types of memory such as DRAM, SRAM, magnetoresistive RAM (MRAM), phase change memory (PCM), Flash, read-only memory (ROM), and/or combinations of such. Accordingly, FIG. 2 depicts an example in which memory resources (e.g., the memory 202) of the memory device 140 are included in the memory die 155. In some embodiments, the memory die 155 includes one memory, two memories, or more than two memories. In some embodiments, the memory die 155 includes a DRAM die, and the memory 202 represents DRAM.

In some optional embodiments, the memory die 155 includes a processor 210. Like the processor 110, the processor 210 can include a variety of types of processors such as CPUs, application specific integrated circuits (ASICs), accelerators, GPUs, and other types of processors. In the illustrated example, the processor 210 is coupled to the memory 202. Thus, FIG. 2 depicts an example in which memory resources (e.g., the memory 202) and compute resources (e.g., the processor 210) of the memory device 140 are included in the memory die 155. Although the example shown in FIG. 2 includes the processor 210, it is to be appreciated that, in some embodiments, the memory die 155 can include additional processors which may be structurally similar to the processor 210 or different from the processor 210.

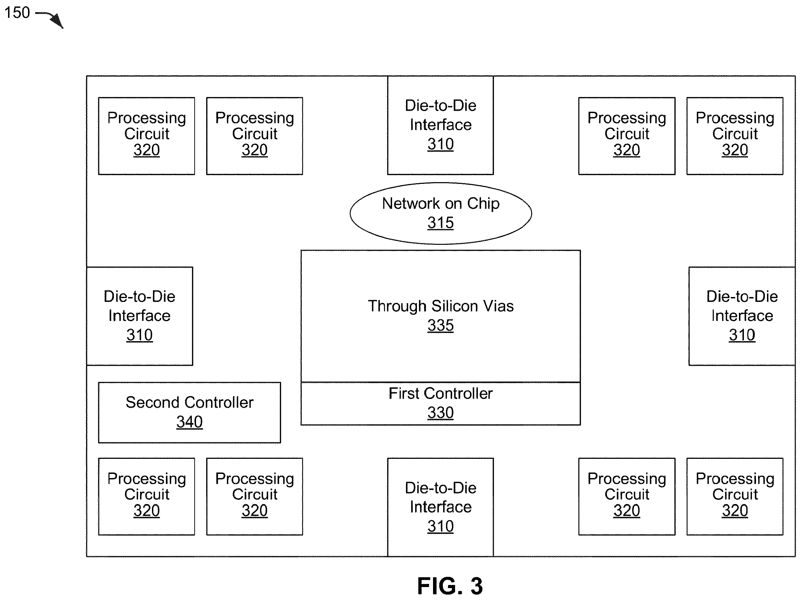

FIG. 3 illustrates a base die 150 of a memory device 140, according to embodiments of the disclosure. In some embodiments, the base die 150 may function as an input/output interface (e.g., an interface layer) between a memory die 155 and another component/layer such as an interposer (e.g., a silicon interposer). It is to be appreciated that, in some embodiments, the base die 150 may function as an input/output interface between a first memory die 155 (e.g., above the base die 150) and a second memory die 155 (e.g., below the base die 150).

As shown, a base die 150 can include one or more die-to-die interfaces 310, a network on chip 315, one or more processing circuits 320, a first controller 330, through silicon vias 335, and a second controller 340. It is to be appreciated that, in some embodiments, the resources 134 may be heterogeneous based on different configurations of the base die 150. For example, if the resources 134 of the servers 132 illustrated in FIG. 1 each included a memory device 140, then the resources 134 can be heterogeneous if the base dies 150 of the memory devices 140 have different configurations or components.

In an example in which the memory die 155 illustrated in FIG. 2 is a DRAM die, the first controller 330 may be a memory controller (e.g., a DRAM controller) configured to control the memory 202 using the through silicon vias 335. As shown in FIG. 3, the first controller 330 can be connected to the through silicon vias 335. For instance, the through silicon vias 335 can communicatively couple (e.g., by multiple electrical connections) the memory 202 of the memory die 155 to the first controller 330 of the base die 150. In a particular example, controller logic (CTL) of the first controller 330 can issue a command to a physical interface/layer (PHY) which converts the command into a signal for transmission to the memory die 155 by way of the through silicon vias 335. In the particular example, the through silicon vias 335 may transmit data read from the memory 202 of the memory die 155 to the PHY and the CTL. Although FIG. 3 is illustrated to include the through silicon vias 335, it is to be appreciated that, in some embodiments, hybrid bonding (e.g., dielectric-to-dielectric connections and conductor-to-conductor connections in a stacked configuration) may be used in addition or alternative to the through silicon vias 335.

In some embodiments, the die-to-die interfaces 310 are configured to interface with one or more additional dies and/or various types of compute and/or memory resources, as described below. The die-to-die interfaces 310 are representative of multiple different types of physical interfaces which can support different interface protocols/specifications such as universal chiplet interconnect express (UCIe), bunch of wires (BOW), advanced interface bus (AIB), opensource protocols/specifications (e.g., OpenHBI), and other interface protocols/specifications. Examples of common characteristics among such interface protocols/specifications may include parallel inputs/outputs, support of chiplet-to-chiplet communication, and optional error correction. Although FIG. 3 illustrates four die-to-die interfaces 310, it is to be appreciated that, in some embodiments, the base die 150 includes less than four die-to-die interfaces 310 or more than four die-to-die interfaces 310.

As shown in FIG. 3, the base die 150 includes the network on chip 315 which may be internal to the base die 150 (e.g., integrated into the base die 150). The network on chip 315 may be configured to communicatively couple various devices/components (e.g., in a network-based architecture). For instance, the network on chip 315 may be configured to interface with an accelerator link, a memory controller, and/or another device/component. In some embodiments, the network on chip 315 may connect the die-to-die interfaces 310 to the processing circuits 320, the first controller 330, the second controller 340, and/or other devices/components. In some embodiments, the network on chip 315 may communicatively couple the processing circuits 320 to each other and/or to the second controller 340.

The processing circuits 320 include compute and/or memory resources of the base die 150 of the memory device 140. In some embodiments, compute and/or memory resources are included in the processing circuits 320 in addition or alternative to compute and/or memory resources included in the memory die 155 of the memory device 140. In some embodiments, the second controller 340 is configured to control the processing circuits 320. In some embodiments, the second controller 340 controls triggering kernel execution for the processing circuits 320. A kernel is a function designed to be executed by one or more threads (e.g., in parallel). For instance, triggering kernel execution for a particular processing circuit 320 may cause the particular processing circuit 320 to execute the kernel by executing one or more threads (e.g., in parallel). The second controller 340 can represent or include a management CPU configured to control operations of the processing circuits 320 such as setting parameters of a layer of a machine learning model, collecting results of processing frames of a digital video, transmitting commands with instructions, and other operations.

Although the first controller 330 and the second controller 340 are illustrated as two controllers, it is to be appreciated that, in some embodiments, the first controller 330 and the second controller 340 are implemented as a single controller. It also should be appreciated that by including the processing circuits 320 as part of the base die 150 in relatively close proximity to data (e.g., near the memory 202 of the memory die 155), the processing circuits 320 have faster access (e.g., within fewer milliseconds) to the data at lower energy costs (e.g., more bits per watt or joule) compared to an example in which the processing circuits 320 are not in relatively close proximity to the data. While eight processing circuits 320 are shown, it should be appreciated that, in some embodiments, the base die 150 includes more than eight processing circuits 320 or less than eight processing circuits 320.

Typical factors which may affect a number of processing circuits 320 included in the base die 150 include physical space availability on the base die 150 and whether or not the base die 150 is coupled to a compute device 160. For instance, the base die 150 may include fewer processing circuits 320 if the base die 150 is coupled to a compute device 160 and the base die 150 may include more processing circuits 320 is the base die 150 is not coupled to a compute device 160. Additionally, it should be appreciated that the processing circuits 320 can be structured similarly such that a first one of the processing circuits 320 has first hardware and/or software and a second one of the processing circuits 320 has the first hardware and/or software. It is also to be appreciated that the processing circuits 320 may be different such that the first one of the processing circuits 320 has the first hardware and/or software and the second one of the processing circuits 320 has second hardware and/or software.

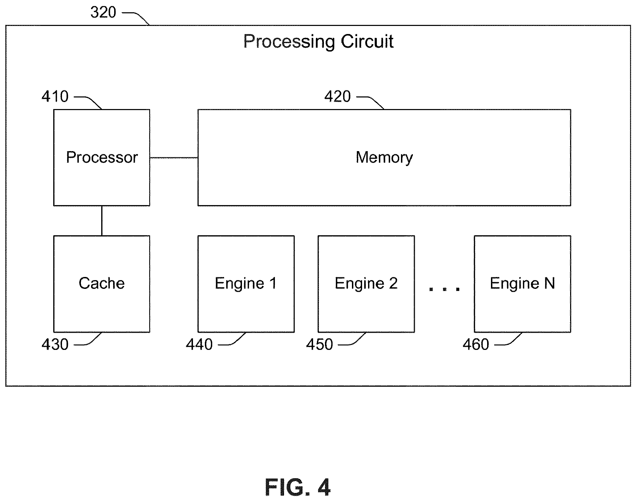

FIG. 4 illustrates a processing circuit 320, according to embodiments of the disclosure. As shown in FIG. 4, a processing circuit 320 includes a processor 410 and a memory 420. In some embodiments, the processing circuit 320 may include a cache 430 as well as engines 440, 450, 460. The engines 440, 450, 460 may include software, hardware, or a combination of software and hardware and the engines 440, 450, 460 may be integrated into the processing circuit 320. An example implementation of one or more of the engines 440, 450, 460 using software includes a set of reusable code (e.g., executing inferences using the large language model 810) while an example implementation of one or more of the engines 440, 450, 460 using hardware includes a particular circuit (e.g., an image signal processor). It is to be appreciated that, in some embodiments, the resources 134 may be heterogeneous based on different configurations of the processing circuit 320. For example, if the resources 134 of the servers 132 illustrated in FIG. 1 each included a memory device 140, then the resources 134 can be heterogeneous if the base dies 150 of the memory devices 140 include processing circuits 320 having different configurations or components.

The processor 410 can include a variety of types of processors such as CPUs, accelerators, GPUs, neural processing units (NPUs), tensor processing units (TPUs), and other types of processors. In some embodiments, the processor 410 includes multiple processors which may be different types of processors (e.g., a GPU, an NPU, and/or a TPU). In general, the processor 410 is configured to execute instructions which may be included in the memory 420, the cache 430, and/or an additional memory/cache. Accordingly, in some embodiments, the processor 410 is connected to the memory 420, the cache 430, and/or the additional memory/cache. Executing the instructions may cause the processor 410 to perform one or more operations (e.g., operations used in training a machine learning model, operations used in inference using a trained machine learning model, and other operations).

The memory 420 can include volatile memory and/or non-volatile memory. In some embodiments, the memory 420 includes tightly coupled memory (TCM) which may be a nearest or fastest memory accessible to the processing circuit 320. In these embodiments, the TCM is "coupled" because the memory 420 is coupled to the processor 410. For instance, TCM can be accessed with minimal latency similar to a cache (e.g., the cache 430) and with greater reliability than the cache where changes in system states may invalidate data.

In some embodiments, the memory 420 may be SRAM. The memory 420 may be private to the processing circuit 320 (e.g., not accessible to another processing circuit 320) or the memory 420 may be accessible to a processor outside of the processing circuit 320 such as a processor included in an additional processing circuit 320 on the base die 150. In some embodiments, the memory 420 may be private to the processing circuit 320 such that the memory 420 is not accessible to other processing circuits 320 or other processors/controllers that may be coupled to the processing circuit 320.

It should be appreciated that, in some embodiments, the memory 420 can be partitioned such that a first portion of the memory 420 is private to the processing circuit 320 and a second portion of the memory 420 is accessible to other processing circuits 320. For instance, the first portion of the memory 420 that is private to the processing circuit 320 may not be used by the other processing circuits 320 (e.g., the other processing circuits 320 may not read from or write to the first portion of the memory 420). In some embodiments, the other processing circuits 320 may use the second portion of the memory 420 (e.g., the other processing circuits 320 can read from and write to the second portion of the memory 420).

In some embodiments, the engines 440, 450, 460 include compute engines (e.g., coprocessors, logic blocks, arithmetic units, and other compute engines) which may be configured to execute particular instructions or perform specialized operations. For example, the engines 440, 450, 460 may include cryptographic engines, compression engines, video processing engines, database processing engines, graphics engines, gaming engines, domain specific engines, and/or other types of engines. In some embodiments, the engine 440 includes a general matrix multiply engine and the engine 450 includes a math engine. The general matrix multiply engine can be configured for matrix-to-matrix multiplication acceleration and the math engine may be configured to process element-wise operations on floating point numbers (e.g., including basic math, exponentiation, and trigonometric functions).

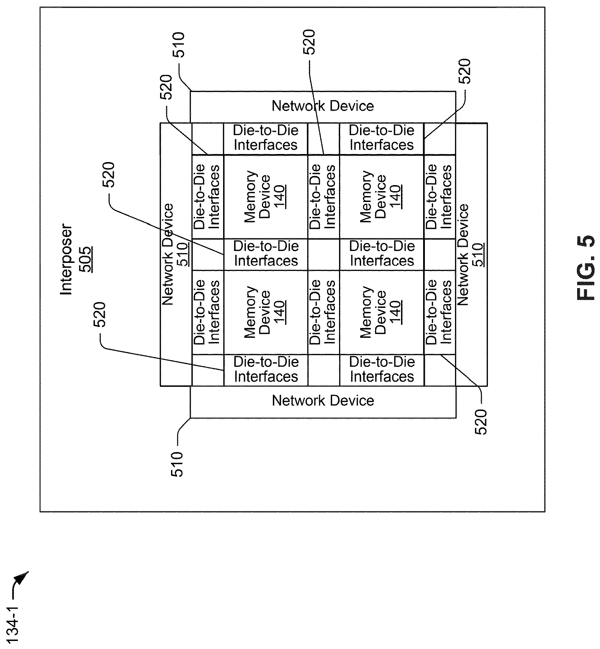

FIG. 5 illustrates an example of a first set of resources 134-1 for performing memory intensive operations, according to embodiments of the disclosure. As depicted in FIG. 5, a first set of resources 134-1 may include one or more interposers 505, one or more memory devices 140, one or more network devices 510, and one or more die-to-die interfaces 520. The interposers 505 (e.g., silicon interposers) may be configured to communicatively couple some portions of the first set of resources 134-1 to other portions of the first set of resources 134-1.

In some embodiments, one or more interposers 505 may be configured to connect the first set of resources 134-1 with another first set of resources 134-1 or multiple other first sets of resources 134-1. Accordingly, the interposers 505 can comprise multiple smaller interposers 505 and the interposers 505 may be combined into larger interposers 505 (e.g., having a larger effective/functional area). For instance, one or more interposers 505 may represent or include bridges (e.g., silicon bridges), substrates, connection circuitry, package substrates, or other circuitry.

In the example shown in FIG. 5, die-to-die interfaces 520 connect the memory devices 140 to the network devices 510 by. Also, die-to-die interfaces 520 are illustrated to connect the memory devices 140 to other memory devices 140. In some embodiments, die-to-die interfaces 520 include one or more connections. For example, die-to-die interfaces 520 may include pairs of connected die-to-die interfaces 310 which may be connected by an interposer 505 in some embodiments (e.g., the interposer 505 may include a bridge that connects the die-to-die interfaces 310). For instance, die-to-die interfaces 520 may include a first die-to-die interface 310 of a memory device 140 and a second die-to-die interface 310 of a network device 510 or a second die-to-die interface 310 of another memory device 140. In some embodiments, die-to-die interfaces 520 can include various types of connections which are not limited to pairs of connected die-to-die interfaces 310.

In some embodiments, the network devices 510 may be configured to communicatively couple various devices/components in a network-based architecture (e.g., using links/interfaces). For instance, a network device 510 may be structured similarly to (or the same as) the network on chip 315 described above. In some embodiments, the network devices 510 may be configured to connect the first set of resources 134-1 to one or more additional memory devices 140, one or more additional first sets of resources 134-1, and/or various other systems/devices included in the resources 134.

In the first set of resources 134-1 shown in FIG. 5, die-to-die interfaces 520 connect the memory devices 140 to the other memory devices 140. In some embodiments, the memory devices 140 are connected in a mesh network such that each memory device 140 is connected to every other memory device 140 included in the first set of resources 134-1. In these embodiments, the memory devices 140 may directly communicate with neighboring/adjacent memory devices 140 in all directions. By leveraging the mesh network, a first memory device 140 may access memory and/or compute resources of a second memory device 140 in addition or alternative to memory and/or compute resources of the first memory device 140 in an efficient manner.

It should be appreciated that, in some embodiments, the memory devices 140 include both memory resources (e.g., the memory 202) and compute resources (e.g., the processing circuits 320). Accordingly, the first set of resources 134-1 is capable of performing operations that are compute intensive (e.g., generating a representation of a user input to a large language model as one or more tokens). The first set of resources 134-1 is also capable of performing operations that are memory intensive (e.g., iteratively generating outputs from a large language model based on a representation of a user input).

Although FIG. 5 depicts four memory devices 140 that each include four die-to-die interfaces 310, it should be appreciated that the first set of resources 134-1 may include any number of memory devices 140 which can each include any number of die-to-die interfaces 310. Additionally, while FIG. 5 illustrates two memory devices 140 in each of two rows, in some embodiments, the first set of resources 134-1 includes memory devices 140 in other array-like arrangements, for example: two memory devices 140 in a 1x2 matrix, nine memory devices 140 in a 3x3 matrix, 16 memory devices 140 in a 4x4 matrix, or another number of memory devices 140 in another matrix. Additionally, while the memory devices 140 are illustrated in FIG. 5 to be the same or similar (e.g., a homogeneous system), in some embodiments, a first one of the memory devices 140 can be different from a second one of the memory devices 140. For example, the first and second ones of the memory devices 140 can have different processing capabilities, different memory capabilities, different interface capabilities, and other different capabilities.

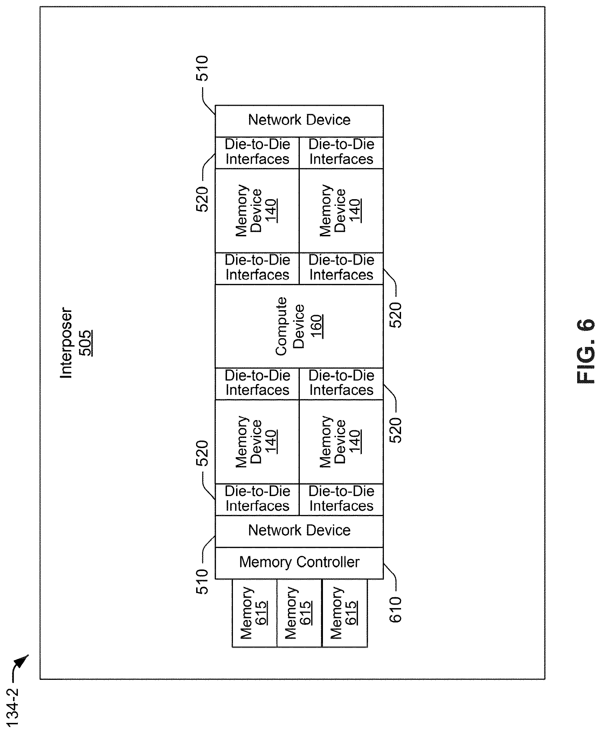

FIG. 6 illustrates an example of a second set of resources 134-2 for performing memory intensive operations and/or compute intensive operations, according to embodiments of the disclosure. As depicted in FIG. 6, a second set of resources 134-2 may include one or more interposers 505, one or more memory devices 140, one or more compute devices 160, one or more network devices 510, one or more die-to-die interfaces 520, one or more memory controllers 610, and one or more memories 615. In the example shown, die-to-die interfaces 520 connect the memory devices 140 to the network devices 510 and die-to-die interfaces 520 also connect the memory devices 140 to a compute device 160.

In general, the compute device 160 is configured to manage/control operations of the second set of resources 134-2. In some embodiments, the compute device 160 includes one or more processors such as CPUs, accelerators, GPUs, NPUs, TPUs, and other processors. For instance, the compute device 160 may have greater processing/computing capacity than processing circuits 320 included in the base die 150 of the memory devices 140. In some embodiments, the compute device 160 includes the functionality of the second controller 340 which the compute device 160 uses to control the processing circuits 320 included in the memory devices 140.

As illustrated in FIG. 6, a network device 510 may be configured to interface with one or more memory modules such as a memory controller 610. In the illustrated example, the memory controller 610 is communicatively coupled to one or more memories 615. The memories 615 can include volatile memory and/or non-volatile memory. In some embodiments, the memory controller 610 may include a low-power double data rate (LPDDR) memory controller and the one or more memories 615 may include one or more LPDDR memories, e.g., to expand memory resources of the memory die 155 of the memory devices 140. For instance, the memories 615 can provide additional memory resources to supplement memory resources of the memory 202 of the memory die 155 that are usable by the base die 150.

In some embodiments, the memory 202 and the memories 615 may form faster and slower tiers, respectively, of a tiered memory system. In specific applications, the memories 615 may be used for prefetching relatively large amounts of data such as a portion of a machine learning model. In a machine learning example, layer-by-layer data swapping from the memories 615 to the memory 202 may be performed to minimize latency (e.g., during a model inference).

It should be appreciated that, in some embodiments, differences between the first set of resources 134-1 and the second set of resources 134-2 may correspond to differences in compute/memory consumption and/or end-to-end latency when the first and second sets of resources 134-1, 134-2 are implemented to perform similar operations. In some embodiments, the first set of resources 134-1 may be capable of accessing memory (e.g., the memory 202) with less delay/latency than the second set of resources 134-2. In these embodiments, the memory 202 may be accessible with less delay/latency than the memories 615. For example, a memory 202 may be accessible to a processing circuit 320 in the first set of resources 134-1 more quickly (e.g., in less time) than a memory 615 (e.g., or a memory 202) is accessible to the compute device 160 in the second set of resources 134-2.

In some embodiments, the second set of resources 134-2 may be capable of executing instructions with less delay/latency than the first set of resources 134-1. In these embodiments, the compute device 160 includes greater computing/processing capacity than the processing circuits 320 in the memory devices 140 of the first set of resources 134-1. It is to be appreciated that, in some embodiments, the second set of resources 134-2 can include multiple compute devices 160 which may further increase computing/processing capacity of the second set of resources 134-2 compared to the first set of resources 134-1.

Although FIG. 6 depicts four memory devices 140 that each include two die-to-die interfaces 310, it should be appreciated that the second set of resources 134-2 may include any number of memory devices 140 which can each include any number of die-to-die interfaces 310. Additionally, while FIG. 6 illustrates two memory devices 140 in each of two rows, in some embodiments, the second set of resources 134-2 includes memory devices 140 in other arrangements. For example, the other arrangements may include six memory devices 140, eight memory devices 140, 16 memory devices 140, or another number of memory devices 140. Further, while the memory devices 140 are illustrated in FIG. 6 to be the same or similar, in some embodiments, a first one of the memory devices 140 can be different from a second one of the memory devices 140.

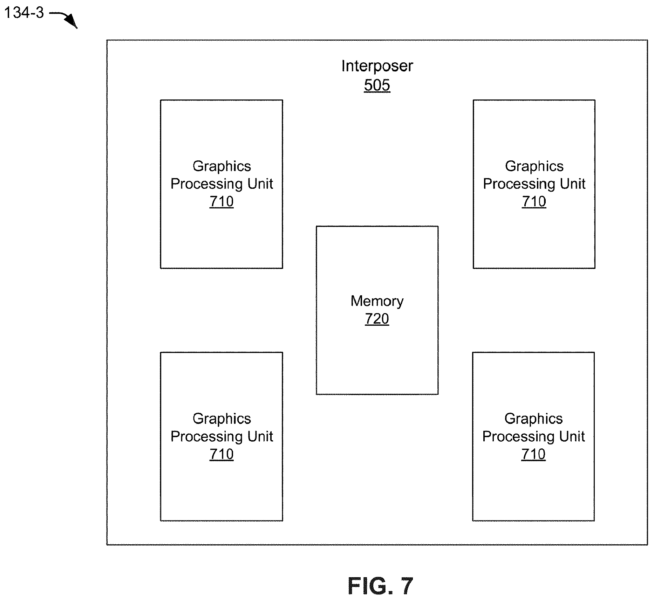

FIG. 7 illustrates an example of a third set of resources 134-3 for performing compute intensive operations, according to embodiments of the disclosure. As shown in FIG. 7, a third set of resources 134-3 may include one or more interposers 505, one or more GPUs 710, and one or more memories 720. In some embodiments, a memory 720 (e.g., or multiple memories 720) may be accessible to GPUs 710 included in the third set of resources 134-3. The memory 720 may include volatile memory and/or non-volatile memory. Although four GPUs 710 are illustrated in FIG. 7, in some embodiments, the third set of resources 134-3 may include less than four GPUs 710 (e.g., one GPU 710) or more than four GPUs 710.

In some embodiments, the third set of resources 134-3 may include less computing/processing capacity than the first and second sets of resources 134-1, 134-2. In other embodiments, the third set of resources 134-3 may include more computing/processing capacity than the first set of resources 134-1. It should be appreciated that, in some embodiments, the third set of resources 134-3 can include more computing/processing capacity than the second set of resources 134-2.

Consider an example in which performance specifications for the GPUs 710 included third set of resources 134-3 can vary significantly between different designs/implementations of the GPUs 710. In this example, the third set of resources 134-3 may include relatively high-performance GPUs 710 such that the third set of resources 134-3 has substantial computing/processing capacity (e.g., greater computing/processing capacity than the first set of resources 134-1). Alternatively, in this example, the third set of resources 134-3 may include relatively low-performance GPUs 710 such that the third set of resources 134-3 has a moderate amount of computing/processing capacity (e.g., less computing/processing capacity than the first set of resources 134-1).

In some embodiments, the first and second sets of resources 134-1, 134-2 may be capable of accessing memory (e.g., the memory 202) with less delay/latency than the third set of resources 134-3 is capable of accessing memory (e.g., the memory 720). As described above, the processing circuits 320 in the memory devices 140 included in the first and second sets of resources 134-1, 134-2 may access corresponding memories 202 with minimal latency based on the relatively close physical proximity between the processing circuits 320 and the corresponding memories 202. In the third set of resources 134-3, delays/latency associated with the GPUs 710 accessing the memory 720 may depend on the physical proximity between the GPUs 710 and the memory 720. Accordingly, in some embodiments, the GPUs 710 included in the third set of resources 134-3 may be able to access the memory 720 with a latency similar to a latency associated with the compute device 160 accessing the memory 202 in the second set of resources 134-2.

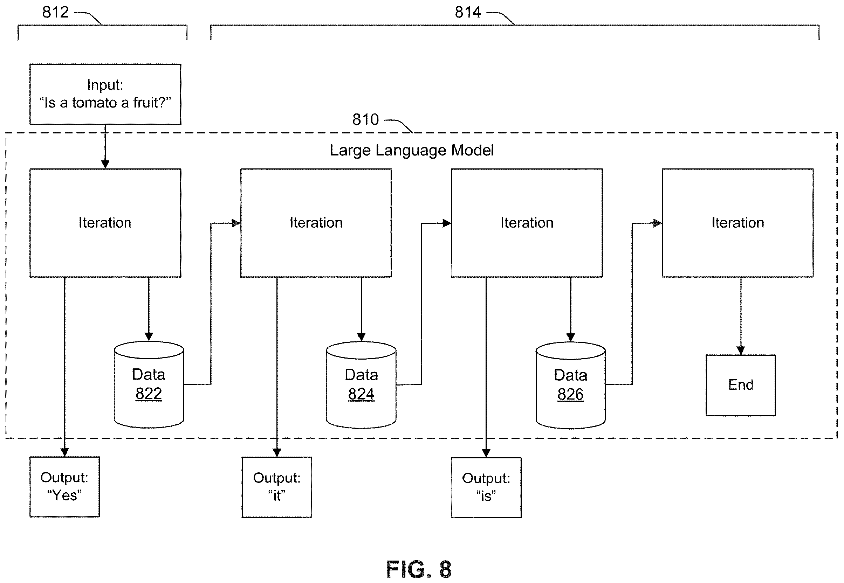

FIG. 8 illustrates a representation of performing an inference operation using a generative large language model 810, according to embodiments of the disclosure. As shown in FIG. 8, the operation is to be performed using a generative large language model 810. In the illustrated example, the large language model 810 is trained on training data to generate outputs based on user inputs such as a natural language user input. In FIG. 8, the large language model 810 is shown receiving a natural language user input asking "is a tomato a fruit?"

In some embodiments, the processor 110 illustrated in FIG. 1 may be configured to cause the resources 134 of the servers 132 to perform the operation using the large language model 810. As described above, in some embodiments, the resources 134 are heterogeneous such that different servers 132 may have different resources 134. For instance, the resources 134 of a first server 132 may include the first set of resources 134-1, the resources 134 of a second server 132 may include the second set of resources 134-2, the resources 134 of a third server 132 may include the third set of resources 134-3, and the resources 134 of other servers 132 may include other sets of resources.

As illustrated in FIG. 8, the operation performed using the large language model 810 includes a first portion 812 and a second portion 814. The first portion 812 of the operation is also referred to as a "prefill" phase or a "summarization" phase because during the first portion 812 of the operation, the user input is processed to generate a representation of the user input. In some embodiments, during the first portion 812 of the operation, first context data is generated and saved as data 822 (e.g., describing a key-value cache in a transformer-based large language model 810) and a first token is generated for the second portion 814 of the operation. A token is a discrete portion of a machine learning model input/output that typically maps between a word/character and an embedding vector in a latent space of the machine learning model.

Context may include any information available to (e.g., used by) the large language model 810 when the large language model 810 generates a token as part of an output based on the user input. For instance, the first context data may include a variety of different information related to processing the user input such as how the first token is semantically related to an output to be generated by the large language model 810, previous user inputs to the large language model 810, outputs generated by the large language model 810 based on the previous user inputs, and/or other information related to processing the user input. In an example in which the large language model 810 includes a transformer-based model, context can be represented by key vectors and value vectors. In this example, the key vectors and the value vectors correspond to intermediate outputs of layers of the large language model 810 that can be reused (rather than recomputed) and are typically stored in a key-value cache.

In general, the first portion 812 of the operation may be compute intensive overall. It is to be appreciated that, in some embodiments, suboperations within the first portion 812 of the operation may be memory intensive. In an example in which the large language model 810 is a transformer-based machine learning model, generating the context data (e.g., the data 812) may be memory intensive or other suboperations included in the first portion of the operation 812 can be memory intensive.

The second portion 814 of the operation is referred to as a "decode" phase or a "generation" phase. In the second portion 814 of the operation, the first token and the first context data (e.g., the data 822) are used to generate second context data and a second token. In some embodiments, the second context data includes the first context data and the first token. It is to be appreciated that, in some embodiments, particular context generated by the large language model 810 for each new iteration includes all context generated by the large language model 810 in each previous iteration. For instance, the large language model 810 may also include a temporal window that truncates older context which is excluded from the temporal window such that data describing the particular context is also limited in size.

As shown, the second context data is saved as data 824 and the second token is used (e.g., passed forward) for the next iteration of the large language model 810. For this next iteration, the second token and the second context data (e.g., the data 824) are used to generate third context data and a third token. The third context data may include the second context data (that includes the first context data and the first token) and the second token.

For instance, the third context data may be saved as data 826. In the illustrated example, the third token indicates an end of the natural language output and the second portion 814 of the operation ends at the next iteration of the large language model 810. As shown in FIG. 8, the combined output from the iterations in the second portion 814 of the operation is "yes it is" which is based on the natural language user input of "is a tomato a fruit?"

In general, the second portion 814 of the operation may be memory intensive overall. For instance, accessing the data 822 and/or the data 824 may cause the second portion 814 of the operation to be memory intensive overall. It is to be appreciated that, in some embodiments, suboperations within the second portion 814 of the operation can be compute intensive. For example, generating the second token may be compute intensive.

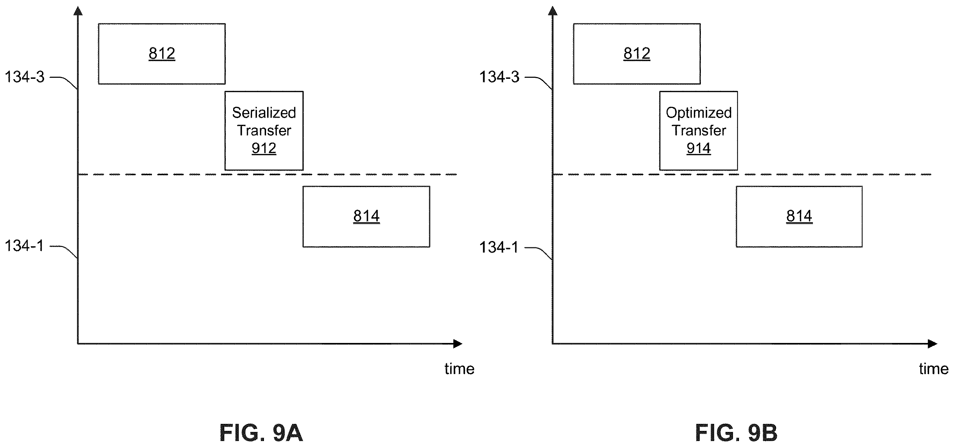

FIG. 9A illustrates a representation of performing first and second portions 812, 814 of an inference operation using heterogeneous resources 134, according to embodiments of the disclosure. As shown in FIG. 9A, the third set of resources 134-3 performs the first portion 812 of the operation and the first set of resources 134-1 performs the second portion 814 of the operation.

In an example with reference to FIG. 8, the large language model 810 may be included in the third set of resources 134-3 and/or on a server 132 having the third set of resources 134-3. In some embodiments, the large language model 810 may be included on or available to the machine 105. It is to be appreciated that, in some embodiments, the large language model 810 can be available to the third set of resources 134-3 in a variety of ways including multiple different ways. It is to be further appreciated that, in some embodiments, multiple large language models 810 may be available to the third set of resources 134-3.

The third set of resources 134-3 processes an input (e.g., a natural language user input) to generate context and a token for the second portion 814 of the operation. For instance, the GPUs 710 execute instructions that cause the GPUs 710 to generate the context and the token for the second portion 814 of the operation. In some embodiments, the context is saved as the data 822 (e.g., by the third set of resources 134-3).

With reference to FIG. 9A, in order for the first set of resources 134-1 to perform the second portion 814 of the operation, the data 822 describing the context is transferred from the third set of resources 134-3 to the first set of resources 134-1 via a serialized transfer 912. In some embodiments, the serialized transfer 912 begins around the end of the first portion 812 of the operation and then transfers all of the data 822 to the first set of resources 134-1 in a serialized manner. As shown in FIG. 9A, after the data 822 is available, the first set of resources 134-1 performs the second portion 814 of the operation to generate an output (e.g., a natural language output) based on the input.

It may be more desirable to perform the first and second portions 812, 814 of the operation using the third and first sets of resources 134-3, 134-1, respectively, than to perform both of the first and second portions 812, 814 of the operation using the third set of resources 134-3 or using the first set of resources 134-1. For instance, the first portion 812 of the operation is generally compute intensive and the third set of resources 134-3 may have a greater amount of computing/processing capacity than the first set of resources 134-1. Accordingly, the additional computing/processing capacity of the third set of resources 134-3 may be useful/beneficial for performing the first portion 812 of the operation which is generally compute intensive.

Additionally, the second portion 814 of the operation is generally memory intensive as described above. In some embodiments, the first set of resources 134-1 may be capable of accessing memory (e.g., the memory 202) with less delay/latency than the third set of resources 134-3. For instance, the GPUs 710 in the third set of resources 134-3 may access the memory 720 in a first average amount of time and the processing circuits 320 in the first set of resources 134-1 may access the memory 202 in a second average amount of time that is less than the first average amount of time. Thus, it may be more desirable to perform the second portion 814 of the operation (that is generally memory intensive) using the first set of resources 134-1 than the third set of resources 134-3.

FIG. 9B illustrates a representation of performing first and second portions 812, 814 of an inference operation using heterogeneous resources 134, according to embodiments of the disclosure. As depicted in FIG. 9B, the third set of resources 134-3 performs the first portion 812 of the operation and the first set of resources 134-1 performs the second portion 814 of the operation which is also illustrated in FIG. 9A. Unlike the example shown in FIG. 9A in which the data 822 describing the context is transferred to the first set of resources 134-1 via the serialized transfer 912, in FIG. 9B, the data 822 describing the context is transferred to the first set of resources 134-1 via an optimized transfer 914. In some embodiments, in the optimized transfer 914, the data 822 describing the context is transferred to the first set of resources 134-1 per layer of the large language model 810.

In the illustrated example, the optimized transfer 914 may be more efficient than the serialized transfer 912. In some embodiments, performing the optimized transfer 914 may incur additional overhead (e.g., for synchronization of per layer transfer and execution) compared to performing the serialized transfer 912. In these embodiments, performing the optimized transfer 914 may be beneficial when the data 822 describing the context is relatively large.

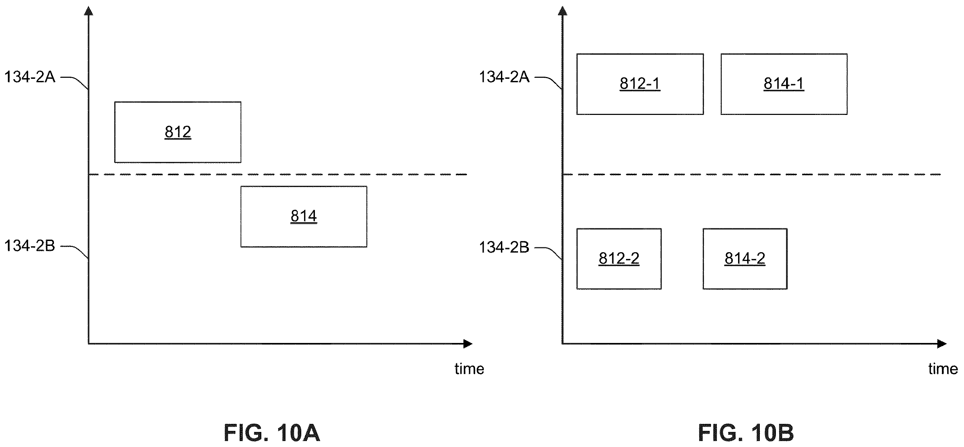

FIG. 10A illustrates a representation of performing first and second portions 812, 814 of an inference operation using heterogeneous resources 134, according to embodiments of the disclosure. As shown in FIG. 10A, the second set of resources 134-2 in a first configuration 134-2A performs the first portion 812 of the operation and the second set of resources 134-2 in a second configuration 134-2B performs the second portion 814 of the operation.

Compared to the example shown in FIG. 9A in which the heterogeneous resources 134 include the first and third sets of resources 134-1, 134-3 (e.g., two different sets of the resources 134), in the example depicted in FIG. 10A, the heterogeneous resources 134 include the second set of resources 134-2 (e.g., one set of the resources 134) in the first and second configurations 134-2A, 134-2B. With reference to FIG. 8, the large language model 810 may be accessible to the second set of resources 134-2 in various ways such as described above with respect to the third set of resources 134-3. For instance, the large language model 810 can be included in the second set of resources 134-2 and/or on a server 132 having the second set of resources 134-2.

In some embodiments, in the first configuration 134-2A, the compute device 160 provides computing/processing capacity for use with the memory 202 or the memories 615. It is to be appreciated that, in some embodiments, in the first configuration 134-2A, the compute device 160 may provide all, most, or some of the computing/processing capacity used to perform the first portion 812 of the operation. With reference to FIG. 10A, the second set of resources 134-2 in the first configuration 134-2A performs the first portion 812 of the operation by processing an input (e.g., a natural language user input) to generate context and a token for the second portion 814 of the operation. For instance, the compute device 160 executes instructions that cause the compute device 160 to generate the context and the token for the second portion 814 of the operation.

In some embodiments, the context is saved as the data 822 (e.g., by the second set of resources 134-2). However, unlike the examples illustrated in FIGs. 9A and 9B in which the data 822 describing the context is transferred via the serialized transfer 912 and the optimized transfer 914, respectively, in FIG. 10A, the data 822 describing the context does not need to be transferred in order to perform the second portion 814 of the operation. This is because the second set of resources 134-2 performs both the first and second portions 812, 814 of the operation in the first and second configurations 134-2A, 134-2B, respectively. Accordingly, in the example shown in FIG. 10A, the data 822 describing the context is available to perform the second portion 814 of the operation in the second configuration 134-2B after performing the first portion 812 of the operation in the first configuration 134-2A. It should be appreciated that avoiding transfer of the data 822 describing the context corresponds to a reduction in power consumption (e.g., more bits per watt or joule), a reduction in latency (e.g., operations completed within fewer milliseconds), and other improvements.

As shown in FIG. 10A, the second set of resources 134-2 performs the second portion 814 of the operation in the second configuration 134-2B using the data 822 describing the context. In some embodiments, in the second configuration 134-2B, the processing circuits 320 of the memory devices 140 provide computing/processing capacity for use with the memory 202 or the memories 615. For instance, if the memory 202 is used for the first portion 812 of the operation, then the memories 615 may be used for the second portion 814 of the operation. Similarly, if the memories 615 are used for the first portion 812 of the operation, then the memory 202 may be used for the second portion 814 of the operation. It should be appreciated that, in some embodiments, in the second configuration 134-2B, the processing circuits 320 may provide all, most, or some of the computing/processing capacity used to perform the second portion 814 of the operation. In the illustrated example, the second set of resources 134-2 in the second configuration 134-2B performs the second portion 814 of the operation to generate an output (e.g., a natural language output) based on the input.

It may be more desirable to perform the first and second portions 812, 814 of the operation using the second set of resources 134-2 in the first and second configurations 134-2A, 134-2B, respectively, than to perform one of the first and second portions 812, 814 of the operation using the first set of resources 134-1 or the third set of resources 134-3. As described above, by using the second set of resources 134-2 to perform the first and second portions 812, 814 of the operation, the data 822 describing the context does not need to be transferred. In some embodiments, avoiding transfer of the data 822 describing the context may be more beneficial than the advantages of performing one of the first and second portions 812, 814 of the operation using the first set of resources 134-1 or the third set of resources 134-3.

FIG. 10B illustrates a representation of performing first and second portions 812, 814 of an inference operation using heterogeneous resources 134, according to embodiments of the disclosure. As shown in FIG. 10B, the second set of resources 134-2 in the first configuration 134-2A performs the first portion 812 of the operation at a coarse grain 812-1 and performs the second portion 814 of the operation at a coarse grain 814-1. As further shown, the second set of resources 134-2 in the second configuration 134-2B performs the first portion 812 of the operation at a fine grain 812-2 and performs the second portion 814 of the operation at a fine grain 814-2. In some embodiments, in order to perform the first portion 812 of the operation at the fine grain 812-2 and the second portion 814 of the operation at the fine grain 814-2, one or more operations of the large language model 810 may be scheduled based on batch size, user input length, data type, embedding dimensions, or other metrics/features.

It should be appreciated that performing operations using the resources 134 may include performing one or more portions of the operations using the first set of resources 134-1, the second set of resources 134-2, the third set of resources 134-3, and/or additional sets of the resources 134. In some embodiments, in order to perform the operations with the large language model 810 using the resources 134, aspects of the operations, the large language model 810, and the resources 134 are determined dynamically and analyzed to perform the operations based on a service level objective, an optimization goal, and/or query prioritization. For instance, the service level objective may define a maximum end-to-end latency (e.g., 100 milliseconds) for performing the operations. It is to be appreciated that, in some embodiments, the service level objective may be based on a time to first token, throughput constraints, end-to-end latency, or other metrics.

Time to first token is a metric referring to an amount of time between transmitting an input to a machine learning model and the model's generation of a first portion of an output based on the input. By way of example, in FIG. 8, the time to first token would correspond to an amount of time (e.g., latency) between transmission of the user input asking "is a tomato a fruit?" to the large language model 810 and generation of the token "yes" by the large language model 810. End-to-end latency is a metric referring to an amount of time between transmitting an input to a machine learning model and the model's generation of a last portion of an output based on the input. By way of additional example, in FIG. 8, the end-to-end latency would correspond to an amount of time between transmission of the user input asking "is a tomato a fruit?" to the large language model 810 and generation of the token "is" (or reaching "end" of sentence) by the large language model 810.

In some embodiments, the optimization goal can be based on a maximum performance per watt (e.g., bits per watt, inferences per second per watt, FLOPS per watt, instructions per second per watt, or other power consumption metrics). For instance, the optimization goal may be to maximize device utilization, minimize end-to-end latency, or another improvement metric. The query prioritization may be based on priority and/or latency requirements. It should be appreciated that the query prioritization may be specified (e.g., by a user) or the query prioritization may be generated based on one or more metrics such as ordered based on latency requirements.

In some embodiments, aspects of the operations determined/analyzed can include latency specifications, data types, operation types (e.g., training or inference), additional inputs, dependencies on other operations, or other aspects of the operations. It should be appreciated that there may be some overlapping determinations/analyses in some embodiments. For example, latency specifications can be partially based on aspects of the operations and partially based on aspects of the resources 134.

In some embodiments, aspects of the large language model 810 determined/analyzed may include a number of layers, a number of heads, embedding dimensions, a batch size, data types, input sequence lengths, key-value cache sizes, time to first token, end-to-end latency, throughput constraints, or other aspects of the large language model 810. An architecture of the large language model 810 (e.g., transformer based, neural network based, or based on another type of model) may be determined/analyzed in order to perform the operations.

In some embodiments, aspects of the resources 134 determined/analyzed may include availability of floating point operations per second (FLOPS), memory capacity/bandwidth, data transfer capabilities (e.g., interconnect bandwidth), or other aspects of the resources 134. The aspects of the resources 134 may be determined/analyzed for each device included in the resources 134. Accordingly, for each device included in the resources 134, power consumption may be estimated with respect to computing/processing, memory usage, cache transfer, data 822 transfer, and/or other operations. It should be appreciated that, in some embodiments, the aspects of the resources 134 can be determined/analyzed for each set of devices included in the resources 134. Regardless of the level at which the aspects of the resources 134 are determined/analyzed, results of determinations/analyses may be empirical values, theoretical values, estimated values, or other values.

With reference to FIG. 1, consider an example in which the processor 110 executes instructions that cause the processor 110 to analyze the resources 134 for performing one or more operations using the large language model 810. In this example, the processor 110 prioritizes the one or more operations (e.g., based on latency requirements) and then analytically computes one or more service metrics for devices included in the resources 134 to be compared with a service level objective. For instance, the service level objective may be end-to-end latency and the first, second, and third sets of resources 134-1, 134-2, 134-3 can meet/achieve the service level objective. Continuing the example, the processor 110 computes one or more metrics for the first, second, and third sets of resources 134-1, 134-2, 134-3 and selects the second set of resources 134-2 based on the one or more metrics. The second set of resources 134-2 may perform the first portion 812 of the operation at the coarse grain 812-1 or the fine grain 812-2. Similarly, the second set of resources 134-2 may perform the second portion 814 of the operation at the coarse grain 814-1 or the fine grain 814-2.

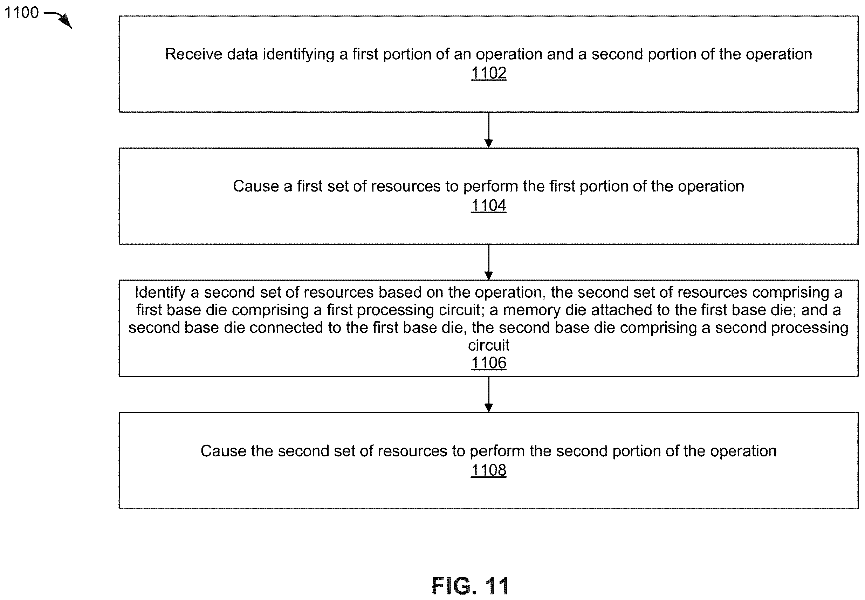

FIG. 11 shows a flowchart of an example procedure 1100 for performing portions of an inference operation, according to embodiments of the disclosure. At block 1102, data is received identifying a first portion 812 of an operation and a second portion 814 of the operation. At block 1104, a first set of resources is caused to perform the first portion 812 of the operation. At block 1106, a second set of resources is identified based on the operation, the second set of resources including a first base die 150 having a first processing circuit 320, a memory die 155 attached to the first base die 150, and a second base die 150 connected to the first base die 150, the second base die 150 including a second processing circuit 320. At block 1108, the second set of resources is caused to perform the second portion 814 of the operation.

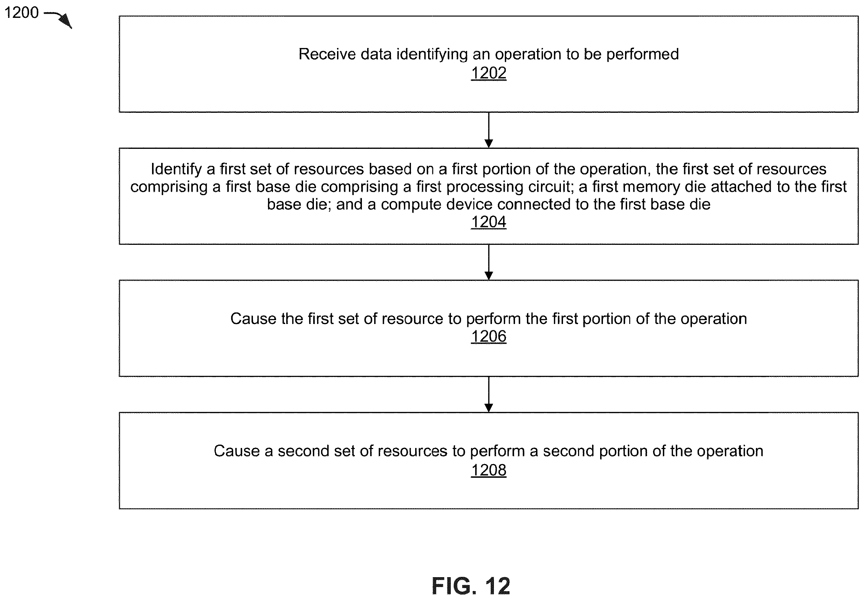

FIG. 12 shows a flowchart of an example procedure 1200 for performing portions of an inference operation, according to embodiments of the disclosure. At block 1202, data is received identifying an operation to be performed. At block 1204, a first set of resources is identified based on a first portion 812 of the operation, the first set of resources including a first base die 150 having a first processing circuit 320, a first memory die 155 attached to the first base die 150, and a compute device 160 connected to the first base die 150. At block 1206, the first set of resources is caused to perform the first portion 812 of the operation. At block 1208, a second set of resources is caused to perform a second portion 814 of the operation.

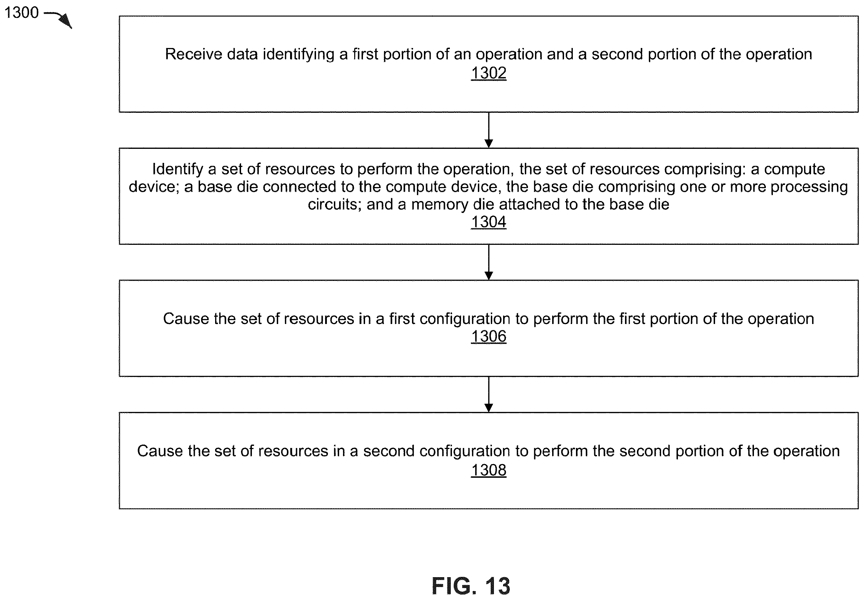

FIG. 13 shows a flowchart of an example procedure 1300 for performing portions of an inference operation, according to embodiments of the disclosure. At block 1302, data is received identifying a first portion 812 of an operation and a second portion 814 of the operation. At block 1304, a set of resources is identified to perform the operation, the set of resources including a compute device 160, a base die 150 connected to the compute device 160, the base die 150 including one or more processing circuits 320, and a memory die 155 attached to the base die 150. At block 1306, the set of resources in a first configuration is caused to perform the first portion 812 of the operation. At block 1308, the set of resources in a second configuration is caused to perform the second portion 814 of the operation.

In FIGs. 11-13, some embodiments of the disclosure are shown. But a person skilled in the art will recognize that other embodiments of the disclosure are also possible, by changing the order of the blocks, by omitting blocks, or by including links not shown in the drawings. All such variations of the flowcharts are considered to be embodiments of the disclosure, whether expressly described or not.

The following discussion is intended to provide a brief, general description of a suitable machine or machines in which certain aspects of the disclosure may be implemented. The machine or machines may be controlled, at least in part, by input from conventional input devices, such as keyboards, mice, and other input devices, as well as by directives received from another machine, interaction with a virtual reality (VR) environment, biometric feedback, or other input signal. As used herein, the term "machine" is intended to broadly encompass a single machine, a virtual machine, or a system of communicatively coupled machines, virtual machines, or devices operating together. Exemplary machines include computing devices such as personal computers, workstations, servers, portable computers, handheld devices, telephones, tablets, and other machines, as well as transportation devices, such as private or public transportation, e.g., automobiles, trains, cabs, and other transportation devices.

The machine or machines may include embedded controllers, such as programmable or non-programmable logic devices or arrays, application specific integrated circuits (ASICs), embedded computers, smart cards, and the like. The machine or machines may utilize one or more connections to one or more remote machines, such as through a network interface, modem, or other communicative coupling. Machines may be interconnected by way of a physical and/or logical network, such as an intranet, the Internet, local area networks, wide area networks, and other networks. One skilled in the art will appreciate that network communication may utilize various wired and/or wireless short range or long range carriers and protocols, including radio frequency (RF), satellite, microwave, Institute of Electrical and Electronics Engineers (IEEE) 802.11, Bluetooth^{®}, optical, infrared, cable, laser, and other carriers/protocols.

Embodiments of the present disclosure may be described by reference to or in conjunction with associated data including functions, procedures, data structures, application programs, and other data. which when accessed by a machine results in the machine performing tasks or defining abstract data types or low-level hardware contexts. Associated data may be stored in, for example, the volatile and/or non-volatile memory, e.g., random access memory (RAM), read only memory (ROM), and other memories, or in other storage devices and their associated storage media, including hard-drives, floppy-disks, optical storage, tapes, flash memory, memory sticks, digital video disks, biological storage, and other devices/media. Associated data may be delivered over transmission environments, including the physical and/or logical network, in the form of packets, serial data, parallel data, propagated signals, and other forms of transmission, and may be used in a compressed or encrypted format. Associated data may be used in a distributed environment, and stored locally and/or remotely for machine access.

Embodiments of the disclosure may include a tangible, non-transitory machine-readable medium comprising instructions executable by one or more processors, the instructions comprising instructions to perform the elements of the disclosures as described herein.

The various operations of methods described above may be performed by any suitable means capable of performing the operations, such as various hardware and/or software component(s), circuits, and/or module(s). The software may comprise an ordered listing of executable instructions for implementing logical functions, and may be embodied in any "processor-readable medium" for use by or in connection with an instruction execution system, apparatus, or device, such as a single or multiple-core processor or processor-containing system.

The blocks or steps of a method or algorithm and functions described in connection with the embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium. A software module may reside in random access memory (RAM), flash memory, read only memory (ROM), electrically programmable ROM (EPROM), electrically erasable programmable ROM (EEPROM), registers, hard disk, a removable disk, or any other form of storage medium known in the art.

Having described and illustrated the principles of the disclosure with reference to illustrated embodiments, it will be recognized that the illustrated embodiments may be modified in arrangement and detail without departing from such principles, and may be combined in any desired manner. And, although the foregoing discussion has focused on particular embodiments, other configurations are contemplated. In particular, even though expressions such as "according to an embodiment of the disclosure" or the like are used herein, these phrases are meant to generally reference embodiment possibilities, and are not intended to limit the disclosure to particular embodiment configurations. As used herein, these terms may reference the same or different embodiments that are combinable into other embodiments.

The foregoing illustrative embodiments are not to be construed as limiting the disclosure thereof. Although a few embodiments have been described, those skilled in the art will readily appreciate that many modifications are possible to those embodiments without materially departing from the novel teachings and advantages of the present disclosure. Accordingly, all such modifications are intended to be included within the scope of this disclosure as defined in the claims.

Consequently, in view of the wide variety of permutations to the embodiments described herein, this detailed description and accompanying material is intended to be illustrative only, and should not be taken as limiting the scope of the disclosure. What is claimed as the disclosure, therefore, is all such modifications as may come within the scope of the following claims.

## Claims

1. A method comprising:
receiving data identifying a first portion of an operation and a second portion of the operation;
causing a first set of resources to perform the first portion of the operation;
identifying a second set of resources based on the operation, the second set of resources comprising:
a first base die comprising a first processing circuit;
a memory die attached to the first base die; and
a second base die connected to the first base die, the second base die comprising a second processing circuit; and
causing the second set of resources to perform the second portion of the operation.

2. The method according to claim 1, wherein the operation comprises an inference using a generative large language model.

3. The method according to claim 2, wherein the first set of resources is identified based on a time to first to token using the generative large language model.

4. The method according to claim 1 or 2, wherein the first set of resources is identified based on a latency for performing the first portion of the operation.

5. The method according to any one of claims 1 to 4, wherein the first set of resources comprises:
a compute device; and
a third base die connected to the compute device, the third base die comprising a third processing circuit.

6. The method according to any one of claims 1 to 5, wherein the first set of resources comprises one or more graphics processing units.

7. The method according to any one of claims 1 to 6, wherein performing the first portion of the operation comprises:
generating context data by the first set of resources; and
transferring the context data to the second set of resources.

8. A method comprising:
receiving data identifying an operation to be performed;
identifying a first set of resources based on a first portion of the operation, the first set of resources comprising:
a first base die comprising a first processing circuit;
a first memory die attached to the first base die; and
a compute device connected to the first base die;
causing the first set of resources to perform the first portion of the operation; and
causing a second set of resources to perform a second portion of the operation.

9. The method according to claim 8, wherein the second set of resources comprises:
a second base die comprising a second processing circuit;
a second memory die attached to the second base die; and
a third base die connected to the second base die, the third base die comprising a third processing circuit.

10. The method according to claim 8 or 9, wherein the operation comprises an inference using a generative large language model.

11. The method according to any one of claims 8 to 10, wherein the second set of resources is identified based on a latency for performing the second portion of the operation.

12. The method according to any one of claims 8 to 11, wherein performing the first portion of the operation comprises:
generating context data by the first set of resources; and
transferring the context data to the second set of resources.

13. The method according to claim 12, wherein the second set of resources performs the second portion of the operation using the context data.

14. The method according to any one of claims 8 to 13, further comprising:
identifying a third set of resources based on an additional operation, the third set of resources comprising a graphics processing unit; and
causing the third set of resources to perform the additional operation.

15. A method comprising:
receiving data identifying a first portion of an operation and a second portion of the operation;
identifying a set of resources to perform the operation, the set of resources comprising:
a compute device;
a base die connected to the compute device, the base die comprising one or more processing circuits; and
a memory die attached to the base die;
causing the set of resources in a first configuration to perform the first portion of the operation; and
causing the set of resources in a second configuration to perform the second portion of the operation.
